# EUROPEAN PATENT APPLICATION

(11) **EP 1 642 916 A1**
(43) Date of publication of application: **05.04.2006**
(21) Application number: 05020531.9
(22) Date of filing: 21.09.2005
(51) Int. Cl.: C08G 18/67, C08G 18/76

(54) **Polyester-polyurethane composites**

(30) Priority: 04.10.2004 US 957993
(71) Applicant: Bayer MaterialScience LLC, Pittsburgh PA 15205 (US)
(72) Inventor: Super, Michael S., Pittsburgh, PA 15213 (US); Haider, Karl W., Hurricane, WV 26626 (US)
(74) Representative: Klimiuk, Meike

(57) **Abstract**

The present invention provides polyester-polyurethane composites made by applying a polyurethane matrix including at least one polyether containing both hydroxyl-functionality and unsaturation-functionality to an unsaturation-containing polyester matrix. Adhesion between the polyester matrix and the polyurethane matrix in the inventive composites is promoted by the polyether containing both hydroxyl-functionality and unsaturation-functionality.

## Description

### Field of the Invention

The present invention relates in general to composites, and more specifically, to polyester-polyurethane composites in which adhesion between an unsaturation containing polyester matrix and a polyurethane matrix is greatly enhanced by the inclusion in the polyurethane matrix of at least one polyether containing both hydroxyl-functionality and unsaturation-functionality.

### Background of the Invention

Shen et al., in U.S. Pat. No. 5,854,386, disclose polyethers which contain both hydroxyl-functionality and unsaturation-functionality. These bi-functional compounds are prepared by oxyalkylating an unsaturated monomer having at least one oxyalkylatable hydrogen in the presence of an effective amount of a double metal cyanide complex catalyst, optionally, when necessary, in the presence of a free radical polymerization inhibitor. Although the resulting polyethers are said to be suitable for such uses as polymer polyol stabilizers or stabilizer precursors, and both *in situ* and *ex situ* impact modifiers for thermoplastics, no suggestion is made in Shen et al. of using these polyethers as adhesion promoters between polyurethanes and unsaturated polyesters.

U.S. Pat. No. 6,461,732, issued to Wittmann et al., teaches composites of at least two different plastics materials joined directly to one another. One plastic is a thermoplastic polymer or a thermoplastic mixture of polymers which contains at least one polar compound of at least one metal as an extremely finely divided powder and the other plastic is polyurethane.

Therefore, a need continues to exist in the art for polyester-polyurethane composites having improved adhesion between the polyester and polyurethane layers.

### Summary of the Invention

Accordingly, the present invention provides a composite made from an unsaturation-containing polyester matrix and a polyurethane matrix including at least one polyether containing both hydroxyl-functionality and unsaturation-functionality. The inventive composites exhibit markedly improved adhesion between the polyurethane and polyester matrices.

These and other advantages and benefits of the present invention will be apparent from the Detailed Description of the Invention herein below.

### Detailed Description of the Invention

The present invention will now be described for purposes of illustration and not limitation. Except in the operating examples, or where otherwise indicated, all numbers expressing quantities, percentages, molecular weights and so forth in the specification are to be understood as being modified in all instances by the term "about." Equivalent weights and molecular weights given herein in Daltons (Da) are number average equivalent weights and number average molecular weights respectively, unless indicated otherwise.

The present invention provides a composite made from an unsaturation-containing polyester matrix and a polyurethane matrix including at least one polyether containing both hydroxyl-functionality and unsaturation-functionality, wherein the at least one polyether containing both hydroxyl-functionality and unsaturation-functionality promotes adhesion between the polyester and polyurethane matrices

The present invention further provides a process for producing a polyurethane-polyester composite involving applying a polyurethane matrix including a polyether containing both hydroxyl-functionality and unsaturation-functionality to a partially cured unsaturation-containing polyester matrix and curing the matrices.

The present invention involves the incorporation of the hydroxyl terminus of a polyether containing both hydroxyl-functionality and unsaturation-functionality into a polyurethane polymer matrix. Without wishing to be limited to any theory, the inventors herein speculate that the unsaturated group of this polyether is chemically integrated into an unsaturation-containing polyester matrix during application of the polyurethane polymer matrix to the polyester matrix. The polyether containing both hydroxyl-functionality and unsaturation-functionality is thus chemically bonded to both polymer matrices, thereby greatly improving the adhesion between the two different matrices. Without this unsaturation-containing polyether, tensile adhesion values in such polyurethane-polyester composites are typically below 100 psi. In the inventive composites, at levels as low as 3 parts by weight ("pbw") of the polyether containing both hydroxyl-functionality and unsaturation-functionality, adhesion values of greater than 400 psi can be achieved.

As mentioned above, the salient feature of the present invention is that the polyurethane is formed containing a polyether containing both hydroxyl-functionality and unsaturation-functionality having e.g., an acrylate functional group as one end group and a hydroxyl functional group as the other end group. This polyurethane is applied onto an unsaturation-containing polyester gel coat. The polyurethane is preferably applied before this polyester gel coat has completely cured (which occurs via a free radical cure mechanism) so that the acrylate-containing polyether can react with both the polyester gel coat (via the acrylate moiety) and with the isocyanate of the polyurethane via the hydroxyl moiety.

### Polyurethane matrix

The polyurethane matrix of the inventive composite is produced by the reaction of a polyisocyanate with an isocyanate-reactive component. The isocyanate-reactive component includes at least one polyether containing both hydroxyl-functionality and unsaturation-functionality. This reaction preferably occurs at an isocyanate index of greater than 100 and more preferably at an isocyanate index of between 103 and 107.

### Isocyanate

Any of the known organic isocyanates, modified isocyanates or isocyanate-terminated prepolymers made from any of the known organic isocyanates may be used to produce the polyurethane matrix of the inventive composites. Suitable isocyanates include aromatic, aliphatic, and cycloaliphatic polyisocyanates and combinations thereof. Useful isocyanates include, but are not limited to, diisocyanates such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclohexane diisocyanate, hexahydro-toluene diisocyanate and its isomers, isophorone diisocyanate, dicyclo-hexylmethane diisocyanates, 1,5-naphthylene diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyldiphenylpropane-4,4'-diisocyanate; triisocyanates such as 2,4,6-toluene triisocyanate; and polyisocyanates such as 4,4'-dimethyldiphenylmethane-2,2',5,5'-tetraisocyanate and the polymethylene polyphenylpolyisocyanates.

Undistilled or a crude polyisocyanate may also be used in producing the polyurethane matrix of the inventive composite. The crude toluene diisocyanate obtained by phosgenating a mixture of toluene diamines and the crude diphenylmethane diisocyanate obtained by phosgenating crude diphenylmethanediamine (polymeric MDI) are examples of suitable crude polyisocyanates. Suitable undistilled or crude polyisocyanates are disclosed in U.S. Pat. No. 3,215,652.

Modified isocyanates are obtained by chemical reaction of diisocyanates and/or polyisocyanates. Modified isocyanates useful in the practice of the present invention include isocyanates containing ester groups, urea groups, biuret groups, allophanate groups, carbodiimide groups, isocyanurate groups, uretdione groups and/or urethane groups. Preferred examples of modified isocyanate include prepolymers containing NCO groups and having an NCO content of from 25 to 35 wt %, preferably from 28 to 32 wt %, particularly those based on polyether polyols or polyester polyols and diphenylmethane diisocyanate. Processes for the production of these prepolymers are known in the art. Polyisocyanate adducts containing biuret groups may be prepared from the previously mentioned diisocyanates by processes such as those disclosed in U.S. Pat. Nos. 3,124,605; 3,358,010; 3,644,490; 3,862,973; 3,903,126; 3,903,127; 4,051,165; 4,147,714 or 4,220,749 by using co-reactants such as water, tertiary alcohols, primary and secondary monoamines, and primary and/or secondary diamines. The preferred diisocyanate to be used in these processes is 1,6-diisocyanato-hexane.

Polyisocyanate adducts containing allophanate groups may be prepared from diisocyanates by any of the processes disclosed in U.S. Pat. Nos. 3,769,318 and 4,160,080; British Patent 994,890; and German Offenlegungsschrift 2,040,645.

Polyisocyanate adducts containing isocyanurate groups may be prepared by trimerizing diisocyanates in accordance with the processes disclosed in U.S. Pat. Nos. 3,487,080; 3,919,218; 4,040,992; 4,288,586; and 4,324,879; German Auslegeschrift 1,150,080; German Offenlegungsschrift 2,325,826; and British Patent 1,465,812. The preferred diisocyanates to be used for producing such adducts are 2,4 diisocyanatotoluylene, 2,6-diisocyanatotoluene and mixtures of these isomers; 1,6-diisocyanatohexane; isophorone diisocyanate and mixtures of 1,6-diisocyanatohexane and isophorone diisocyanate.

### Isocyanate-reactive component

Although any isocyanate-reactive compound may be used to produce the polyurethane matrix of the inventive composite, polyether polyols are preferred as isocyanate-reactive components. Suitable methods for preparing polyether polyols are known and are described, for example, in EP-A 283 148, U.S. Pat. Nos. 3,278,457; 3,427,256; 3,829,505; 4,472,560; 3,278,458; 3,427,334; 3,941,849; 4,721,818; 3,278,459; 3,427,335; and 4,355,188.

Suitable polyether polyols may be used such as those resulting from the polymerization of a polyhydric alcohol and an alkylene oxide. Examples of such alcohols include ethylene glycol, propylene glycol, trimethylene glycol, 1,2-butanediol, 1,3-butanediol, 1,4-butanediol, 1,2-pentanediol, 1,4-pentanediol, 1,5-pentanediol, 1,6-hexanediol, 1,7-heptanediol, glycerol, 1,1,1-trimethylolpropane, 1,1,1-trimethylolethane, or 1,2,6-hexanetriol. Any suitable alkylene oxide may be used such as ethylene oxide, propylene oxide, butylene oxide, amylene oxide, and mixtures of these oxides. Polyoxyalkylene polyether polyols may be prepared from other starting materials such as tetrahydrofuran and alkylene oxide-tetrahydrofuran mixtures, epihalohydrins such as epichlorohydrin, as well as aralkylene oxides such as styrene oxide. The polyoxyalkylene polyether polyols may have either primary or secondary hydroxyl groups. Included among the polyether polyols are polyoxyethylene glycol, polyoxypropylene glycol, polyoxybutylene glycol, polytetramethylene glycol, block copolymers, for example, combinations of polyoxypropylene and polyoxyethylene glycols, poly-1,2-oxybutylene and polyoxyethylene glycols and copolymer glycols prepared from blends or sequential addition of two or more alkylene oxides. The polyoxyalkylene polyether polyols may be prepared by any known process.

### Polyether containing both hydroxyl-functionality and unsaturation-functionality

The isocyanate-reactive component of the polyurethane matrix of the composite of the present invention includes one or more polyethers containing both hydroxyl-functionality and unsaturation-functionality. Such polyethers may be made by various methods as known in the art. The inventors herein prefer polyethers containing both hydroxyl-functionality and unsaturation-functionality made according to the methods disclosed in U.S. Pat. No. 5,854,386. Examples of suitable starters for such polyethers include, but are not limited to, hydroxyalkylacrylates and methacrylates such as hydroxyethylacrylate, hydroxypropylacrylate, hydroxybutylacrylate, hydroxyethylmethacrylate and hydroxypropylmethacrylate, unsaturated monocarboxylic acids, particularly α-unsaturated acids such as acrylic acid and methacrylic acid, half esters of unsaturated carboxylic acids such as maleic acid methyl half ester, maleic acid ethyl half ester, and fumaric acid methyl half ester; oligomeric reaction products of unsaturated dicarboxylic acids or acid anhydrides with diols or polyoxyalkylene oligomer glycols such as bis(2-hydroxyethyl)maleate and bis(2-hydroxyethyl)fumarate, unsaturated aromatic compounds such as 4-vinylphenol, and the like.

Particularly preferred are those polyethers based on monomethacrylic acid made according to U.S. Pat. Nos. 5,854,386 and 6,664,360, the entire contents of both patents are incorporated herein by reference thereto. The polyether containing both hydroxyl-functionality and unsaturation-functionality may preferably be present in the isocyanate-reactive component in an amount ranging from 0.5 to 10 pbw, more preferably from 1.5 to 8 pbw, based on the weight of the isocyanate-reactive component. The polyether containing both hydroxyl-functionality and unsaturation-functionality may be present in the isocyanate-reactive component of the polyurethane matrix of the inventive composite in an amount ranging between any combination of these values, inclusive of the recited values.

### Polyester matrix

The polyester matrix of the inventive composite is prepared from polycarboxylic acids and polyalcohols and contains ethylenically unsaturated functionality. The unsaturated functionality may be provided by the polycarboxylic acid itself or may result from the inclusion in the polyester matrix of copolymerizable compounds having ethylenically unsaturated functionality. Suitable unsaturated polycarboxylic acids such as maleic acid, fumaric acid, itaconic acid, maleic acid mono (meth)acryloyloxyethyl ester, succinic acid mono (meth)acryloyloxyethyl ester and phthalic acid mono (meth)acryloyloxyethyl ester may be used. Also suitable are polycarboxylic acids including terephthalic acid, isophthalic acid, phthalic acid, trimellitic acid, cycloaliphatic dicarboxylic acids, such as hexahydroterephthalic acid and hexahydrophthalic acid, and linear aliphatic dicarboxylic acids, such as succinic, glutaric, adipic, azelaic, sebacic and decanedicarboxylic acid or dimeric fatty acids. Compounds having ethylenically unsaturated groups, which are copolymerizable with the polycarboxylic acid include styrene, α-styrene, vinyltoluene, vinylpyrrolidone, vinylether, vinylester, divinylbenzene and di(meth)acrylic acid esters of diols, such as ethanediol, 1,3-propanediol and 1,4-butanediol. Most preferred are those polyesters containing styrene. Preferred are those polyesters containing up to 50 wt.%, more preferably from 10 to 50 wt.%, most preferably from 20 to 50 wt.%, based on the weight of the polyester matrix, of unsaturated functionality.

Suitable polyalcohols for the polyester matrix include glycols, such as ethylene glycol, diethylene glycol, 1,2-propanediol, 1,3-butanediol, 1,4-butanediol, 1,5-pentanediol, 1,6-hexanediol, 2,2-dimethyl-1,3-propanediol (neopentyl glycol), 1,4-cyclohexanedimethanol, and trifunctional alcohols such as trimethylolpropane and glycerol.

### Fillers and other additives

Suitable fillers and reinforcing agents that may be included in the composite of the present invention include both organic and inorganic compounds, for example, compounds such as glass in the form of fibers, flakes, cut fibers, or microspheres; silica; aluminum silicates; mica, sand, wollastonite; carbon fibers; carbon black; carbon black paste; talc; calcium carbonate; barium sulfate, kieselguhr; whiting; liquid crystal fibers; aramide fibers; and coarse-grained filler, such as gravel; quarry material; slag; comminuted rubble; and foam concrete. The inventive composite may include up to 90 wt.% filler, more preferably from 15 to 90 wt.% filler, most preferably from 50 to 90 wt.% filler; based on the weight of the composite. The filler may be present in the inventive composite in an amount ranging between any combination of these values, inclusive of the recited values.

Depending upon the particular application, the composites of the present invention may also contain other additives commonly used in the art including, but not limited to, leveling agents, wetting agents, flow control agents, anti-skinning agents, anti-foaming agents, viscosity regulators, plasticizers, pigments, dyes and UV absorbers. Stabilizers against thermal and oxidative degradation may also be included as needed.

Among the preferred applications of the inventive compositions are as spas, bath tubs, shower stalls, tub surrounds, sinks, table tops, and kitchen counter tops.

The present invention is further illustrated, but is not to be limited, by the following example. All quantities given in "parts" and "percents" are understood to be by weight, unless otherwise indicated.

### EXAMPLE

A propoxylated hydroxypropyl acrylate, 3 parts (prepared according to U.S. Pat. No. 6,664,360 and having an OH# of 56.9 and a viscosity @ 25°C of 123 cP) was added to 219 parts of a mixture of polyol blend and calcium carbonate (CaCO₃ @ 60% in final mixture, therefore 100 parts polyol blend and 119 parts CaCO₃). The polyol blend contained 2,2,4-trimethyl-1,3-pentanediol diisobutyrate (available from Eastman as TXIB plasticizer).

The solution was well mixed. The resulting material was combined with isocyanate (polymeric MDI, available from Bayer MaterialScience as MONDUR MR having an NCO group content of about 31.5%, a functionality of about 2.8, and a viscosity of about 196 mPa.s at 25°C) at an isocyanate index of 105 (98 parts), mixed for 15 seconds and poured into a mold. The mold had previously been sprayed with an unsaturated polyester gel coat, VIBRIN G309-LA (available from Alpha Owens Corning, 25-30 wt.% styrene content), and partially cured until the surface was still tacky, but not so tacky as to leave material on a test stick used to test the surface. The mold was clamped shut. The part was allowed to cure for about one minute and removed from the mold.

The adhesion of the polyester gel coat to the polyurethane was measured using a hand operated adhesion tester, in which testing elements were glued to the surface of the gel coat. After the glue had dried, the elements were pulled at a right angle to the surface until the element with attached gel coat was freed from the surface. The force required to remove the gel coat from the substrate was measured and recorded. The gel coat adhesion of a composite with no monocarboxylic acid based polyether was tested and found to be <10 psi. The gel coat adhesion of the inventive composite with polyether containing both hydroxyl-functionality and unsaturation-functionality was tested and found to be 400-450 psi.

The foregoing example of the present invention is offered for the purpose of illustration and not limitation. It will be apparent to those skilled in the art that the embodiments described herein may be modified or revised in various ways without departing from the spirit and scope of the invention. The scope of the invention is to be measured by the appended claims.

## Claims

1. A composite comprising:
an unsaturation-containing polyester matrix; and
a polyurethane matrix including at least one polyether containing both hydroxyl-functionality and unsaturation-functionality,
wherein the at least one polyether containing both hydroxyl-functionality and unsaturation-functionality promotes adhesion between the polyester and polyurethane matrices.

2. The composite according to Claim 1, wherein the polyester matrix comprises at least one polycarboxylic acid chosen from terephthalic acid, isophthalic acid, phthalic acid, trimellitic acid, hexahydroterephthalic acid, hexahydrophthalic acid, succinic acid, glutaric acid, adipic acid, azelaic acid, sebacic acid, decanedicarboxylic acid, maleic acid, fumaric acid, itaconic acid, maleic acid mono (meth)acryloyloxyethyl ester, succinic acid mono (meth)acryloyloxyethyl ester and phthalic acid mono (meth)acryloyloxyethyl ester.

3. The composite according to Claim 1, wherein the polyester matrix comprises at least one polyalcohol chosen from ethylene glycol, diethylene glycol, 1,2-propanediol, 1,3-butanediol, 1,4-butanediol, 1,5-pentanediol, 1,6-hexanediol, 2,2-dimethyl-1,3-propanediol (neopentyl glycol), 1,4-cyclohexanedimethanol, trimethylolpropane and glycerol.

4. The composite according to Claim 1, wherein the polyester matrix comprises up to about 50 wt.%, based on the weight of the polyester matrix, of unsaturated functionality provided by at least one copolymerizable monomer chosen from styrene, α-styrene, vinyltoluene, vinylpyrrolidone, vinylether, vinylester, divinylbenzene esters of ethanediol, 1,3-propanediol and 1,4-butanediol and di(meth)acrylic acid esters of ethanediol, 1,3-propanediol and 1,4-butanediol.

5. The composite according to Claim 1, wherein the polyester matrix comprises from about 10 wt.% to about 50 wt.%, based on the weight of the polyester matrix, of unsaturated functionality provided by at least one copolymerizable monomer chosen from styrene, α-styrene, vinyltoluene, vinylpyrrolidone, vinylether, vinylester, divinylbenzene esters of ethanediol, 1,3-propanediol and 1,4-butanediol and di(meth)acrylic acid esters of ethanediol, 1,3-propanediol and 1,4-butanediol.

6. The composite according to Claim 1, wherein the polyester matrix comprises from about 20 wt.% to about 50 wt.%, based on the weight of the polyester matrix, of unsaturated functionality provided by at least one copolymerizable monomer chosen from styrene, α-styrene, vinyltoluene, vinylpyrrolidone, vinylether, vinylester, divinylbenzene esters of ethanediol, 1,3-propanediol and 1,4-butanediol and di(meth)acrylic acid esters of ethanediol, 1,3-propanediol and 1,4-butanediol.

7. The composite according to Claim 1, wherein the at least one polyether containing both hydroxyl-functionality and unsaturation-functionality comprises a polyether based on one of hydroxyethylacrylate, hydroxypropylacrylate, hydroxybutylacrylate, hydroxyethylmethacrylate, hydroxypropylmethacrylate, acrylic acid, methacrylic acid, maleic acid methyl half ester, maleic acid ethyl half ester, fumaric acid methyl half ester, bis(2-hydroxyethyl)maleate, bis(2-hydroxyethyl)fumarate and 4-vinylphenol.

8. The composite according to Claim 1, wherein the at least one polyether containing both hydroxyl-functionality and unsaturation-functionality is based on one of acrylic acid and methacrylic acid.

9. The composite according to Claim 1, wherein the at least one polyether containing both hydroxyl-functionality and unsaturation-functionality is present in an amount of from about 0.5 to about 10 parts by weight, based on the weight of the isocyanate-reactive component.

10. The composite according to Claim 1, wherein the at least one polyether containing both hydroxyl-functionality and unsaturation-functionality is present in an amount of from about 1.5 to about 8 parts by weight, based on the weight of the isocyanate-reactive component.

11. The composite according to Claim 1, wherein the polyurethane matrix comprises at least one isocyanate chosen from m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclohexane diisocyanate, hexahydro-toluene diisocyanates, isophorone diisocyanate, dicyclo-hexylmethane diisocyanates, 1,5-naphthylene diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyl-diphenylpropane-4,4'-diisocyanate, 2,4,6-toluene triisocyanate, 4,4'-dimethyl-diphenylmethane-2,2',5,5'-tetraisocyanate and polymethylene polyphenylpolyisocyanates.

12. The composite according to Claim 1, wherein the polyurethane matrix comprises at least one polyol based on ethylene glycol, propylene glycol, trimethylene glycol, 1,2-butanediol, 1,3-butanediol, 1,4-butanediol, 1,2-pentanediol, 1,4-pentanediol, 1,5-pentanediol, 1,6-hexanediol, 1,7-heptanediol, glycerol, 1,1,1-trimethylolpropane, 1,1,1-trimethylolethane or 1,2,6-hexanetriol.

13. The composite according to Claim 1, further including at least one additive chosen from leveling agents, wetting agents, flow control agents, anti-skinning agents, antifoaming agents, fillers, viscosity regulators, plasticizers, pigments, dyes, UV absorbers, stabilizers against thermal degradation and stabilizers against oxidative degradation.

14. The composite according to Claim 1, further including from about 15 wt.% to about 90 wt.%, based on the weight of the composite, of at least one filler chosen from glass fibers, glass flakes, cut glass fibers, glass microspheres, silica, aluminum silicates, mica, sand, wollastonite, carbon fibers, carbon black, carbon black paste, talc, calcium carbonate, barium sulfate, kieselguhr, whiting, liquid crystal fibers, aramide fibers, gravel, quarry material, slag, comminuted rubble and foam concrete.

15. The composite according to Claim 1, further including from about 50 wt.% to about 90 wt.%, based on the weight of the composite, of at least one filler chosen from glass fibers, glass flakes, cut glass fibers, glass microspheres, silica, aluminum silicates, mica, sand, wollastonite, carbon fibers, carbon black, carbon black paste, talc, calcium carbonate, barium sulfate, kieselguhr, whiting, liquid crystal fibers, aramide fibers, gravel, quarry material, slag, comminuted rubble and foam concrete.

16. One of a spa, bath tub, shower stall, tub surround, sink, table top, and kitchen counter top comprising the composite according to Claim 1.

17. In a process for the production of one of a spa, bath tub, shower stall, tub surround, sink, table top, and kitchen counter top, the improvement comprising including the composite according to Claim 1.

18. A process for producing a polyester-polyurethane composite, the process comprising:
applying a polyurethane matrix including a polyether containing both hydroxyl-functionality and unsaturation-functionality to a partially cured unsaturation-containing polyester matrix; and curing the matrices.

19. The process according to Claim 18, wherein the polyester matrix comprises at least one polycarboxylic acid chosen from terephthalic acid, isophthalic acid, phthalic acid, trimellitic acid, hexahydroterephthalic acid, hexahydrophthalic acid, succinic acid, glutaric acid, adipic acid, azelaic acid, sebacic acid, decanedicarboxylic acid, maleic acid, fumaric acid, itaconic acid, maleic acid mono (meth)acryloyloxyethyl ester, succinic acid mono (meth)acryloyloxyethyl ester and phthalic acid mono (meth)acryloyloxyethyl ester.

20. The process according to Claim 18, wherein the polyester matrix comprises at least one polyalcohol chosen from ethylene glycol, diethylene glycol, 1,2-propanediol, 1,3-butanediol, 1,4-butanediol, 1,5-pentanediol, 1,6-hexanediol, 2,2-dimethyl-1,3-propanediol (neopentyl glycol), 1,4-cyclohexanedimethanol, trimethylolpropane and glycerol.

21. The process according to Claim 18, wherein the polyether containing both hydroxyl-functionality and unsaturation-functionality is based on one of hydroxyethylacrylate, hydroxypropylacrylate, hydroxybutylacrylate, hydroxyethylmethacrylate, hydroxypropylmethacrylate, acrylic acid, methacrylic acid, maleic acid methyl half ester, maleic acid ethyl half ester, fumaric acid methyl half ester, bis(2-hydroxyethyl)maleate, bis(2-hydroxyethyl)fumarate and 4-vinylphenol.

22. The process according to Claim 18, wherein the polyether containing both hydroxyl-functionality and unsaturation-functionality is based on one of acrylic acid and methacrylic acid.

23. The process according to Claim 18, wherein the at least one polyether containing both hydroxyl-functionality and unsaturation-functionality is present in an amount of from about 0.5 to about 10 parts by weight, based on the weight of the isocyanate-reactive component.

24. The process according to Claim 18, wherein the at least one polyether containing both hydroxyl-functionality and unsaturation-functionality is present in an amount of from about 1.5 to about 8 parts by weight, based on the weight of the isocyanate-reactive component.

25. The process according to Claim 18, wherein the polyester matrix comprises up to about 50 wt.%, based on the weight of the polyester matrix, of unsaturated functionality provided by at least one copolymerizable monomer chosen from styrene, α-styrene, vinyltoluene, vinylpyrrolidone, vinylether, vinylester, divinylbenzene esters of ethanediol, 1,3-propanediol and 1,4-butanediol and di(meth)acrylic acid esters of ethanediol, 1,3-propanediol and 1,4-butanediol.

26. The process according to Claim 18, wherein the polyester matrix includes from about 10 wt.% to about 50 wt.%, based on the weight of the polyester matrix, of unsaturated functionality provided by at least one copolymerizable monomer chosen from styrene, α-styrene, vinyltoluene, vinylpyrrolidone, vinylether, vinylester, divinylbenzene esters of ethanediol, 1,3-propanediol and 1,4-butanediol and di(meth)acrylic acid esters of ethanediol, 1,3-propanediol and 1,4-butanediol.

27. The process according to Claim 18, wherein the polyester matrix includes from about 20 wt.% to about 50 wt.%, based on the weight of the polyester matrix, of unsaturated functionality provided by at least one copolymerizable monomer chosen from styrene, α-styrene, vinyltoluene, vinylpyrrolidone, vinylether, vinylester, divinylbenzene esters of ethanediol, 1,3-propanediol and 1,4-butanediol and di(meth)acrylic acid esters of ethanediol, 1,3-propanediol and 1,4-butanediol.

28. The process according to Claim 18, wherein the polyurethane matrix comprises at least one isocyanate chosen from m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclohexane diisocyanate, hexahydro-toluene diisocyanates, isophorone diisocyanate, dicyclo-hexylmethane diisocyanates, 1,5-naphthylene diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyl-diphenylpropane-4,4'-diisocyanate, 2,4,6-toluene triisocyanate, 4,4'-dimethyl-diphenylmethane-2,2',5,5'-tetraisocyanate and polymethylene polyphenylpolyisocyanates.

29. The process according to Claim 18, wherein the polyurethane matrix comprises at least one polyol based on ethylene glycol, propylene glycol, trimethylene glycol, 1,2-butanediol, 1,3-butanediol, 1,4-butanediol, 1,2-pentanediol, 1,4-pentanediol, 1,5-pentanediol, 1,6-hexanediol, 1,7-heptanediol, glycerol, 1,1,1-trimethylolpropane, 1,1,1-trimethylolethane or 1,2,6-hexanetriol.

30. The process according to Claim 18, wherein the composite includes at least one filler chosen from glass fibers, glass flakes, cut glass fibers, glass microspheres, silica, aluminum silicates, mica, sand, wollastonite, carbon fibers, carbon black, carbon black paste, talc, calcium carbonate, barium sulfate, kieselguhr, whiting, liquid crystal fibers, aramide fibers, gravel, quarry material, slag, comminuted rubble and foam concrete.

31. The process according to Claim 18, wherein the composite includes from about 15 wt.% to about 90 wt.%, based on the weight of the composite, of at least one filler chosen from glass fibers, glass flakes, cut glass fibers, glass microspheres, silica, aluminum silicates, mica, sand, wollastonite, carbon fibers, carbon black, carbon black paste, talc, calcium carbonate, barium sulfate, kieselguhr, whiting, liquid crystal fibers, aramide fibers, gravel, quarry material, slag, comminuted rubble and foam concrete.

32. The process according to Claim 18, wherein the composite includes from about 50 wt.% to about 90 wt.%, based on the weight of the composite, of at least one filler chosen from glass fibers, glass flakes, cut glass fibers, glass microspheres, silica, aluminum silicates, mica, sand, wollastonite, carbon fibers, carbon black, carbon black paste, talc, calcium carbonate, barium sulfate, kieselguhr, whiting, liquid crystal fibers, aramide fibers, gravel, quarry material, slag, comminuted rubble and foam concrete.

33. One of a spa, bath tub, shower stall, tub surround, sink, table top, and kitchen counter top produced with the composite made by the process according to Claim 18.

34. In a process for the production of one of a spa, bath tub, shower stall, tub surround, sink, table top, and kitchen counter top, the improvement comprising including the composite made by the process according to Claim 18.

35. In a process for promoting the adhesion of a polyester matrix to a polyurethane matrix, the improvement comprising including a polyether containing both hydroxyl-functionality and unsaturation-functionality in the polyurethane matrix.

36. The process according to Claim 35, wherein the polyester matrix comprises at least one polycarboxylic acid chosen from terephthalic acid, isophthalic acid, phthalic acid, trimellitic acid, hexahydroterephthalic acid, hexahydrophthalic acid, succinic acid, glutaric acid, adipic acid, azelaic acid, sebacic acid, decanedicarboxylic acid, maleic acid, fumaric acid, itaconic acid, maleic acid mono (meth)acryloyloxyethyl ester, succinic acid mono (meth)acryloyloxyethyl ester and phthalic acid mono (meth)acryloyloxyethyl ester.

37. The process according to Claim 35, wherein the polyester matrix comprises at least one polyalcohol chosen from ethylene glycol, diethylene glycol, 1,2-propanediol, 1,3-butanediol, 1,4-butanediol, 1,5-pentanediol, 1,6-hexanediol, 2,2-dimethyl-1,3-propanediol (neopentyl glycol), 1,4-cyclohexanedimethanol, trimethylolpropane and glycerol.

38. The process according to Claim 35, wherein the polyether containing both hydroxyl-functionality and unsaturation-functionality is based on one of hydroxyethylacrylate, hydroxypropylacrylate, hydroxybutylacrylate, hydroxyethylmethacrylate, hydroxypropylmethacrylate, acrylic acid, methacrylic acid, maleic acid methyl half ester, maleic acid ethyl half ester, fumaric acid methyl half ester, bis(2-hydroxyethyl)maleate, bis(2-hydroxyethyl)fumarate and 4-vinylphenol..

39. The process according to Claim 35, wherein the at least one polyether containing both hydroxyl-functionality and unsaturation-functionality is present in an amount of from about 0.5 to about 10 parts by weight, based on the weight of the isocyanate-reactive component.

40. The process according to Claim 35, wherein the at least one polyether containing both hydroxyl-functionality and unsaturation-functionality is present in an amount of from about 1.5 to about 8 parts by weight, based on the weight of the isocyanate-reactive component.

41. The process according to Claim 35, wherein the polyester matrix comprises up to about 50 wt.%, based on the weight of the polyester matrix, of unsaturated functionality provided by at least one copolymerizable monomer chosen from styrene, α-styrene, vinyltoluene, vinylpyrrolidone, vinylether, vinylester, divinylbenzene esters of ethanediol, 1,3-propanediol and 1,4-butanediol and di(meth)acrylic acid esters of ethanediol, 1,3-propanediol and 1,4-butanediol.

42. The process according to Claim 35, wherein the polyester matrix comprises from about 10 wt.% to about 50 wt.%, based on the weight of the polyester matrix, of unsaturated functionality provided by at least one copolymerizable monomer chosen from styrene, α-styrene, vinyltoluene, vinylpyrrolidone, vinylether, vinylester, divinylbenzene esters of ethanediol, 1,3-propanediol and 1,4-butanediol and di(meth)acrylic acid esters of ethanediol, 1,3-propanediol and 1,4-butanediol.

43. The process according to Claim 35, wherein the polyester matrix comprises from about 20 wt.% to about 50 wt.%, based on the weight of the polyester matrix, of unsaturated functionality provided by at least one copolymerizable monomer chosen from styrene, α-styrene, vinyltoluene, vinylpyrrolidone, vinylether, vinylester, divinylbenzene esters of ethanediol, 1,3-propanediol and 1,4-butanediol and di(meth)acrylic acid esters of ethanediol, 1,3-propanediol and 1,4-butanediol.

44. The process according to Claim 35, wherein the polyurethane matrix comprises at least one isocyanate chosen from m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclohexane diisocyanate, hexahydro-toluene diisocyanates, isophorone diisocyanate, dicyclo-hexylmethane diisocyanates, 1,5-naphthylene diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyl-diphenylpropane-4,4'-diisocyanate, 2,4,6-toluene triisocyanate, 4,4'-dimethyl-diphenylmethane-2,2',5,5'-tetraisocyanate and polymethylene polyphenylpolyisocyanates.

45. The process according to Claim 35, wherein the polyurethane matrix comprises at least one polyol based on ethylene glycol, propylene glycol, trimethylene glycol, 1,2-butanediol, 1,3-butanediol, 1,4-butanediol, 1,2-pentanediol, 1,4-pentanediol, 1,5-pentanediol, 1,6-hexanediol, 1,7-heptanediol, glycerol, 1,1,1-trimethylolpropane, 1,1,1-trimethylolethane or 1,2,6-hexanetriol.

46. The process according to Claim 35, wherein the composite includes at least one filler chosen from glass fibers, glass flakes, cut glass fibers, glass microspheres, silica, aluminum silicates, mica, sand, wollastonite, carbon fibers, carbon black, carbon black paste, talc, calcium carbonate, barium sulfate, kieselguhr, whiting, liquid crystal fibers, aramide fibers, gravel, quarry material, slag, comminuted rubble and foam concrete.

47. The process according to Claim 35, wherein the polyurethane matrix includes from about 15 wt.% to about 90 wt.%, based on the weight of the composite, of at least one filler chosen from glass fibers, glass flakes, cut glass fibers, glass microspheres, silica, aluminum silicates, mica, sand, wollastonite, carbon fibers, carbon black, carbon black paste, talc, calcium carbonate, barium sulfate, kieselguhr, whiting, liquid crystal fibers, aramide fibers, gravel, quarry material, slag, comminuted rubble and foam concrete.

48. The process according to Claim 38, wherein the polyurethane matrix includes from about 50 wt.% to about 90 wt.%, based on the weight of the composite, of at least one filler chosen from glass fibers, glass flakes, cut glass fibers, glass microspheres, silica, aluminum silicates, mica, sand, wollastonite, carbon fibers, carbon black, carbon black paste, talc, calcium carbonate, barium sulfate, kieselguhr, whiting, liquid crystal fibers, aramide fibers, gravel, quarry material, slag, comminuted rubble and foam concrete.
